(19) Europäisches Patentamt
European Patent Office
Office européen des brevets

(11) **EP 1 165 212 B1**

(12) **EUROPÄISCHE PATENTSCHRIFT**

(45) Veröffentlichungstag und Bekanntmachung des Hinweises auf die Patenterteilung:
**14.05.2003 Patentblatt 2003/20**

(21) Anmeldenummer: **00910783.0**

(22) Anmeldetag: **07.03.2000**

(51) Int Cl.⁷: **B01D 61/36**, B01D 53/22

(86) Internationale Anmeldenummer:
**PCT/EP00/01972**

(87) Internationale Veröffentlichungsnummer:
**WO 00/053292 (14.09.2000 Gazette 2000/37)**

(54) **VERFAHREN UND VORRICHTUNG ZUR TRENNUNG VON FLÜSSIGEN UND/ODER DAMPFFÖRMIGEN STOFFGEMISCHEN DURCH PERVAPORATION UND/ODER DAMPFPERMEATION**

METHOD AND DEVICE OF SEPARATING SUBSTANCE MIXTURES IN LIQUID AND/OR VAPOUR FORM BY PERVAPORATION AND/OR VAPOUR PERMEATION

PROCEDE ET DISPOSITIF POUR SEPARER DES MELANGES DE SUBSTANCES A L'ETAT DE LIQUIDE ET/OU DE VAPEUR PAR PERVAPORATION ET/OU PERMEATION A LA VAPEUR

(84) Benannte Vertragsstaaten:
**AT BE CH CY DE DK ES FI FR GB GR IE IT LI LU MC NL PT SE**

(30) Priorität: **10.03.1999 DE 19910549**

(43) Veröffentlichungstag der Anmeldung:
**02.01.2002 Patentblatt 2002/01**

(73) Patentinhaber: **Celfa AG**
**6423 Seewen-Schwyz (CH)**

(72) Erfinder:
• **HEINZELMANN, Willy**
**CH-6430 Schwyz (CH)**

• **MOLTER, Bernd**
**CH-8200 Schaffhausen (CH)**

(74) Vertreter: **Patentanwälte Feldmann & Partner AG**
**Kanalstrasse 17**
**8152 Glattbrugg (CH)**

(56) Entgegenhaltungen:
**EP-A- 0 094 543          EP-A- 0 572 355**
**US-A- 5 294 345**

• **PATENT ABSTRACTS OF JAPAN vol. 014, no. 417 (C-0756), 10. September 1990 (1990-09-10) & JP 02 160006 A (HITACHI PLANT ENG & CONSTR CO LTD), 20. Juni 1990 (1990-06-20)**

EP 1 165 212 B1

**Beschreibung**

Die Erfindung betrifft ein Verfahren zur Trennung von flüssigen und/oder dampfförmigen Stoffgemischen durch Pervaporation und/oder Dampfpermeation sowie eine Vorrichtung zur Durchführung des Verfahrens.

Es ist bekannt, daß flüssige und/oder dampfförmige Stoffgemische durch Membranen getrennt werden können. Bei der Pervaporation wird ein flüssiges Stoffgemisch einer Membran aufgegeben, wobei ein Stoff des Gemisches von der Membran zurückgehalten wird, während ein zweiter Stoff des Gemisches durch die Membran hindurchtritt sowie von der Rückseite der Membran abgeführt wird, und wobei der durch die Membran hindurchtretende Stoff durch ein Vakuum verdampft und abgeführt oder von einem Inertgasstrom aufgenommen und abgeführt oder von einem inerten Flüssigkeitsstrom aufgenommen und abgeführt wird. Bei der Dampfpermeation wird ein dampfförmiges Stoffgemisch einer Membran aufgegeben, wobei ein Stoff des Gemisches von der Membran zurückgehalten wird, während ein zweiter Stoff des Gemisches durch die Membran hindurchtritt, und wobei der durch die Membran hindurchtretende Stoff durch die Wirkung eines Vakuums abgeführt oder von einem Inertgasstrom aufgenommen und abgeführt oder von einem Flüssigkeitsstrom aufgenommen und abgeführt wird. Der durch die Wirkung eines Vakuums abgeführte Stoff wird, gegebenenfalls nach einem Druckausgleich, durch Kondensation gewonnen. Der durch einen Inertgasstrom abgeführte Stoff wird durch Kondensation aus dem Inertgasstrom abgeschieden. Der durch einen inerten Flüssigkeitsstrom abgeführte Stoff wird durch Destillation aus dem Flüssigkeitsstrom gewonnen. Bei der Pervaporation und Dampfpermeation passiert der abgetrennte Stoff die Membran in Form von dampfförmigen Molekülen. Die Pervaporation und die Dampfpermeation besitzen ein gemeinsames Merkmal, das darin besteht, daß die Triebkraft dieser Trennprozesse auf einem insbesondere von der Konzentrationsdifferenz des abgetrennten Stoffes abhängigen Gradienten beruht, der an beziehungsweise in der Membran vorliegt und der an der Rückseite der Membran durch die Wirkung des Vakuums, durch die Wirkung eines Inertgasstroms oder durch die Wirkung eines inerten Flüssigkeitsstroms erzeugt beziehungsweise aufrechterhalten wird, wobei der Membran die zu trennenden flüssigen und/oder dampfförmigen Stoffgemische bei Normaldruck oder leicht erhöhtem Druck oder leicht vermindertem Druck aufgegeben werden. Die zur Durchführung der Pervaporation geeigneten Membranen können in der Regel auch zur Durchführung der Dampfpermeation verwendet werden, da in beiden Fällen der abzutrennende Stoff die Membran in Form von dampfförmigen Molekülen passiert.

Die Trennung der flüssigen und dampfförmigen Stoffgemische durch Pervaporation und/oder Dampfpermeation erfolgt an der aktiven Trennschicht der Membran, die von einem Polymer gebildet wird, die relativ dünn ist und beispielsweise in bewährten Ausführungsformen einen Durchmesser von 0,5 bis 2 µm aufweist, die bezüglich ihrer chemischen Zusammensetzung homogen ist und die bezüglich ihrer Struktur ebenfalls als homogen beziehungsweise dicht angesehen wird, obwohl sie Poren mit einem Durchmesser von bis zu 2 nm aufweisen kann. Diese Trennschicht ist für die Leistung des Trennverfahrens verantwortlich, welche durch den Permeatfluß und die Selektivität gekennzeichnet ist. Der Permeatfluß gibt die Menge des durch die Membran hindurchtretenden Stoffes an ($kg/m^2 \cdot h$). Die Selektivität $\alpha$ ist ein Maß für die Qualität des Trennverfahrens und definiert mithin die Reinheit des abgetrennten Stoffs. Der Permeatfluß ist eine von der Schichtdicke abhängige Größe, denn in erster Näherung ist der Permeatfluß umgekehrt proportional zur Schichtdicke. Um den Permeatfluß verschiedener Membranen vergleichen zu können, muß er jeweils auf eine bestimmte Schichtdicke bezogen werden, z. B. auf eine Schichtdicke von 1 µm. Der auf eine bestimmte Schichtdicke bezogene Permeatfluß wird als spezifischer Permeatfluß bezeichnet. Im Gegensatz zum Permeatfluß ist die Selektivität in erster Näherung eine von der Schichtdicke weitgehend unabhängige Größe. Bei der Pervaporation und Dampfpermeation im technischen Maßstab sind also in jedem Fall ein hoher Permeatfluß und eine ausreichend hohe Selektivität anzustreben. Die bei den vorgenannten Trennprozessen an der aktiven Trennschicht ablaufenden Vorgänge lassen sich am besten durch das sogenannte Lösungs-Diffusions-Modell beschreiben und erklären.

Da der Permeatfluß mit zunehmender Dicke der aktiven Trennschicht abnimmt, sollten die Trennschichten möglichst dünn sein. Sehr dünne Trennschichten haben aber insbesondere dann, wenn sie im technischen Maßstab eingesetzt werden, eine zu geringe mechanische Stabilität. Daher ist es üblich, daß die dünne, aktive Trennschicht auf eine poröse Stützschicht aufgebracht wird, die der Membran mechanische Stabilität verleiht. Die aus der aktiven Trennschicht und mindestens einer porösen Stützschicht bestehende Membran kann entweder als Komposit-Membran oder als integral-asymmetrische Membran gestaltet werden, wobei es möglich und üblich ist, beide Membrantypen zusätzlich auf einem sehr durchlässigen Trägermaterial (Gewebe, Vlies) anzuordnen. Bei der Herstellung einer Komposit-Membran wird die dichte, aktive Trennschicht als separate Schicht auf eine poröse Stützschicht aufgebracht, wobei diese Stützschicht wiederum aus mehreren einzelnen porösen Schichten bestehen kann und wobei die Trennschicht und die Stützschicht miteinander so fest verbunden werden müssen, daß sie sich während des Betriebs nicht voneinander lösen. Bei der Herstellung einer integral-asymmetrischen Membran wird eine aus einem Polymer oder einem Copolymer oder einer Polymermischung bestehende poröse Membran so hergestellt oder nachträglich modifiziert, daß sich an der einen Seite der Membran eine dünne, homogene, aktive Trennschicht bildet. Die integral-asymmetrische Membran ist hinsichtlich ihrer chemischen Grundzusammensetzung gleichartig (integral) und hinsichtlich ihrer Porenstruktur unterschiedlich (asymmetrisch). Während die Dicke der Trennschicht einer Komposit-Membran relativ einfach und mit einem relativ eindeutigen Ergebnis gemessen werden kann, ist dies bei einer integral-asymmetrischen Membran problematisch, da die Trennschicht der integral-asymmetrischen Membran innerhalb eines Grenzbereichs fließend in die poröse Stützschicht übergeht, während die Trennschicht und die Stützschicht der Komposit-Membran eine relativ gut ausgebildete Grenzlinie bilden.

Es sind Pervaporations- und Dampfpermeations-Membranen bekannt, mit denen bevorzugt Wasser aus organischen Stoffgemischen abgetrennt werden kann (hydrophile Membranen). Es sind aber auch Membranen bekannt, die bevorzugt einzelne organische Stoffe permeieren lassen und Wasser zurückhalten (organophile Membranen). Einige bekannte Membranen eignen sich auch zur Trennung verschiedener organischer Substanzen.

Es ist auch bekannt, daß der Stofftransport durch die Membran mit zunehmender Temperatur steigt. Daher werden die Pervaporation und die Dampfpermeation bevorzugt bei möglichst hohen Temperaturen durchgeführt. Bei der Pervaporation wird die zur Verdampfung des abzutrennenden Stoffes erforderliche Verdampfungswärme der fühlbaren Wärme des zu trennenden Stoffgemisches entzogen. Dabei kühlt sich das Stoffgemisch besonders stark ab, wenn Wasser aus einem organischen Stoffgemisch abgetrennt wird, da Wasser bekanntlich eine hohe Verdampfungswärme hat. Um eine Abkühlung und damit eine Verminderung des Permeatflusses zu verhindern, muß die Verdampfungswärme dem zu trennenden Stoffgemisch wieder zugeführt werden. Bei der Dampfpermeation wird zur Abtrennung eines Stoffes keine Verdampfungswärme benötigt. Ein zu trennendes flüssiges Stoffgemisch kann vor der Dampfpermeation in einem Verdampfer in die Dampfphase überführt werden.

Zur technischen Realisierung einer Stofftrennung durch Pervaporation und/oder Dampfpermeation werden die Membranen in spezielle Gehäuse (Module) eingebaut, welche eine Rückvennischung des zu trennenden Stoffgemisches und des abgetrennten Stoffes mit Sicherheit vermeiden. Ferner müssen die Module gewährleisten, daß bei der Pervaporation eine zu starke Abkühlung des zu trennenden Stoffgemisches verhindert wird. Dies wird nach dem Stand der Technik durch Aufteilung des Zulaufs auf mehrere Module und eine Zwischenschaltung von Wärmeaustauschern erreicht, was aber vor allem bei größeren Anlagen zu recht aufwendigen Konstruktionen führt. Es hat daher nicht an Versuchen gefehlt, Module zu konstruieren, welche mit Hilfe eingebauter Wärmeaustauscher beheizt werden können. Allerdings ist keine dieser Vorrichtungen bisher praktisch verwirklicht worden, da beim Betrieb derartiger Konstruktionen erhebliche technische Probleme entstehen und hohe Betriebskosten resultieren. Bei der Dampfpermeation ist zwar eine mit erheblichem apparativem Aufwand verbundene Zwischenheizung nicht erforderlich, und daher können insgesamt größere Module verwendet werden, aber dem Fachmann ist auch bekannt, daß bei der Dampfpermeation die Dampfphase unter Sättigungsbedingungen über die Membran geleitet werden muß, da jede Überhitzung der Dampfphase zu einer starken Abnahme des Stofftransports führt. Durch Konzentrationsänderungen im Stoffgemisch entlang der Membran ändern sich auch die Sättigungsbedingungen der Dampfphase (Siedetemperatur und Dampfdruck), so daß die Sattdampfbedingungen nur durch Heizung und/oder Kühlung beziehungsweise durch Verdichtung aufrechterhalten werden können. Die prinzipiellen Vorteile der Dampfpermeation können daher im technischen Maßstab aus wirtschaftlichen Gründen bisher nur ungenügend genutzt werden.

Es gehört schließlich zum allgemein bekannten Fachwissen, daß insbesondere bei der Pervaporation dafür zu sorgen ist, daß sich an der Membranoberfläche möglichst kein stationärer Flüssigkeitsfilm ausbilden kann, welcher zu lokalen Konzentrations- und Temperaturunterschieden führt (Konzentrations- und Temperaturpolarisation). Diese Polarisationseffekte bewirken nämlich eine empfindliche Reduktion der Trennleistung und sind um so stärker, je leistungsfähiger die Membran ist. Sie machen also die Vorteile einer leistungsfähigen Membran zumindest teilweise zunichte. Es könnte zwar versucht werden, die Ausbildung eines stationären Films an der Membranoberfläche dadurch zu verhindern, daß durch spezielle Strömungsgeometrieen in den Modulen und möglichst hohe Strömungsgeschwindigkeiten turbulente Strömungsverhältnisse geschaffen werden, aber hohe Strömungsgeschwindigkeiten sind bei der Pervaporation im industriellen Maßstab sehr schwer zu realisieren, weil die realisierbaren Membranleistungen kein hinreichend hohes Verhältnis von Zulaufmenge zu Membranfläche ermöglichen.

Bei der Durchführung der Pervaporation und Dampfpermeation haben sich im industriellen Maßstab für die meisten Anwendungen sogenannte Plattenmodule aus Stahl durchgesetzt, die nach Art von Plattenwärmeaustauschern oder Filterpressen aus einer Vielzahl identischer Plattensysteme aufgebaut sind, welche mit Hilfe spezieller Zuführkanäle größtenteils parallel vom Zulaufstrom zwangsüberströmt werden und welche gegenüber den eingesetzten Chemikalien sowie den angewendeten Temperaturen beständig sind.

Für die Pervaporation oder Dampfpermeation geeignete Modul-Konstruktionen sind z. B. in den Druckschriften EP-A 0 214 496 und DE-A 36 01 909 beschrieben. Das Hauptproblem bei diesen Modulen wird durch die Dichtungen verursacht, welche zur Abdichtung der Zulaufseite von der Permeatseite der Membran über den gesamten Umfang der einzelnen Platten notwendig sind. Der Werkstoff Stahl, die komplizierten und großflächigen Dichtungen und die zur Erzielung einer optimalen Strömungsgeometrie notwendigen Konstruktionsmerkmale führen bei den bekannten Modulen zu relativ hohen Herstellkosten. Dem Fachmann ist zwar bekannt, daß sich andere Modulbauformen, wie z. B. Spiralwickelmodule oder Kapillarmodule bei verschiedenen Membranverfahren als kostengünstiger erwiesen haben, aber diese Konstruktionen haben sich bei der Pervaporation und/oder der Dampfpermeation insbesondere wegen der geringen Strömungsgeschwindigkeiten und der mangelnden Temperatur- und Chemikalienbeständigkeit nur in Ausnahmefällen als technisch brauchbar erwiesen. Versuche, durch spezielle Vorrichtungen die Strömungsgeometrie derart zu verbessern, daß auch bei kleinen Volumenströmen turbulente Strömungsverhältnisse realisiert werden können, haben nicht zur Schaffung von Modulen geführt, die zur Durchführung der Pervaporation und Dampfpermeation im technischen Maßstab eingesetzt werden können.

Aus der Druckschrift DE-C 44 10 243 ist ein Verfahren zur Trennung von flüssigen Stoffgemischen durch kombinierte Pervaporation-Dampfpermeation bekannt, bei dem ein Zulaufstrom in Form eines Dampf-Flüssigkeitsgemisches mit einer dichten Membran in Kontakt gebracht wird und der Zulaufstrom als Dampf-Flüssigkeitsgemisch durch eine erzwungene Strömung von unten nach oben über die vertikal angeordnete Membran geführt wird, so daß eine dauernde Durchmischung von Dampf und Flüssigkeit erfolgt und sich auf der Oberfläche der Membran kein stationärer Flüssigkeitsfilm ausbilden kann. Die optimale Zusammensetzung des Flüssigkeits-Dampf-Gemisches kann jedoch bei diesem Verfahren nur unzureichend eingehalten und kontrolliert werden.

Schließlich beschreibt die Druckschrift EP-A 0 572 355 ein Modul zur Durchführung der Pervaporation, das einen Zulauf für das zu trennende Stoffgemisch, einen Ausgang für das Retentat sowie mindestens eine plattenförmige Pervaporationskammer aufweist, wobei die Kammer beidseitig flächig mit einer Membran und mit mindestens einem Permeatausgang versehen ist und wobei jede Pervaporationskammer zwischen zwei direkt zu ihr benachbarten, plattenförmigen Heizkammern liegt. Bei diesem Modul ist vorgesehen, daß die Pervaporationskammern und die Heizkammern selbsttragende, in sich geschlossene Kammern sind, die berührungslos in einem geschlossenen Durchlaufbehälter angeordnet sind, so daß das zu pervaporierende Fluid jeweils um jede Pervaporationskammer zwischen dieser und den benachbarten Heizplatten in einem Spalt vom Eingang zum Ausgang geradlinig geführt ist. Mit dieser Vorrichtung soll erreicht werden, daß die Pervaporationskammern definiert und zwangsweise überströmt werden und daß die erforderliche Wärme laufend zugeführt wird.

Der Erfindung liegt die Aufgabe zugrunde, ein Verfahren und eine Vorrichtung zur Trennung von flüssigen und/oder dampfförmigen Stoffgemischen durch Pervaporation und/oder Dampfpermeation zu schaffen, die kostengünstig und betriebssicher arbeiten und die technisch einfache Verfahrens- beziehungsweise Vorrichtungsmerkmale verwenden. Insbesondere soll auf eine erzwungene starke beziehungsweise turbulente Überströmung der Membranoberfläche durch das zugeführte und zu trennende Stoffgemisch in einem geschlossenen Modul verzichtet werden, da die Maßnahmen und Mittel, die zum Erreichen einer erzwungenen starken beziehungsweise turbulenten Überströmung eingesetzt werden müssen, die Betriebs- und Investitionskosten erheblich erhöhen, so daß die technische Anwendung der Pervaporation und der Dampfpermeation eingeschränkt ist.

Die der Erfindung zugrunde liegende Aufgabe wird durch die Schaffung eines Verfahrens zur Trennung von flüssigen und/oder dampfförmigen Stoffgemischen durch Pervaporation und/oder Dampfpermeation gelöst, bei dem die Membran als formstabiler, einseitig offener Hohlkörper gestaltet oder auf einem porösen, einseitig offenen, als Träger dienenden Hohlkörper angeordnet ist, bei dem der Hohlkörper in einem beheizbaren Behälter angeordnet ist, der das zu trennende Stoffgemisch enthält, bei dem zwischen dem zu trennenden Stoffgemisch und dem Innenraum des Hohlkörpers bezüglich des abzutrennenden Stoffs (Permeat) ein Konzentrationsgradient eingestellt wird, der das Permeat durch die Membran in den Innenraum des Hohlkörpers transportiert, bei dem das Permeat aus dem Innenraum des Hohlkörpers abgeführt und das vom Permeat abgereicherte Stoffgemisch (Retentat) aus dem Behälter abgeführt wird, wobei im Behälter eine Strömungsgeschwindigkeit von 0,1 bis 0,3 cm/s herrscht.

Beim erfindungsgemäßen Verfahren erfolgt keine erzwungene starke beziehungsweise turbulente Überströmung der Membranoberfläche durch das zu trennende Stoffgemisch in einem geschlossenen Modul, sondern die als Hohlkörper, insbesondere als Rohr, mit außen liegender Trennschicht ausgebildete Membran wird einfach in das zu trennende Stoffgemisch eingetaucht, und das Permeat wird aus dem Innenraum des Hohlkörpers mit einer an sich bekannten Methode entfernt. Der Abstand zwischen der Behälterwand und dem Hohlkörper beziehungsweise zwischen zwei Hohlkörpern ist wesentlich größer als bei den bekannten Modulkonstruktionen, so daß er keine Zwangsüberströmung der Membran bewirken kann, auf die entsprechend der Erfindung bewußt verzichtet wird. Es hat sich nämlich gezeigt, daß bereits die durch die Verdampfung des Permeats erzeugte lokale Abkühlung an der Membranoberfläche für eine ausreichende Durchmischung und Strömung sorgt, so daß die gemessene Leistung des erfindungsgemäßen Verfahrens in der gleichen Größenordnung liegt, wie die Trennleistung der Verfahren, die mit zwangsüberströmten Plattenmodulen arbeiten. Die im Behälter durch die Zufuhr des zu trennenden Stoffgemisches und/oder die Abführung des Retentats erzeugte Strömung ist relativ langsam und dient daher nicht der Vermeidung der Konzentrationspolarisation, die beim erfindungsgemäßen Verfahren insbesondere dadurch verhindert wird, daß an der Membranoberfläche durch die Verdampfung des Permeats und die damit verbundene lokale Abkühlung eine hinreichende Durchmischung des zu trennenden Stoffgemisches entlang der Membranoberfläche erfolgt. Bei der Dampfpermeation sind die durch Konzentrations- und Temperaturpolarisation verursachten Wirkungen nicht von praktischer Bedeutung.

Im Behälter beträgt die erfindungsgemäße Strömungsgeschwindigkeit 0,1 bis 0,3 cm/s, wodurch eine relativ langsame Strömung erzeugt wird. Außerdem ist beim erfindungsgemäßen Verfahren keine Rezirkulation des Behälterinhalts vorgesehen. Durch die geringe Strömungsgeschwindigkeit und die Vermeidung einer Rezirkulation wird im Behälter ein Volumenstrom von < 20 l/h • m$^2$ erzeugt. Um die geringe Strömungsgeschwindigkeit und den niedrigen Volumenstrom im Behälter zu erreichen, müssen seine durchströmten Räume einen großen hydraulischen Durchmesser von 1 bis 3 cm aufweisen, worauf später noch näher eingegangen wird. In den zum Stand der Technik gehörenden Modulen (z. B. Platten-, Spiralwickel-, Kapillar-Module) wird der hydraulische Durchmesser mit 0,2 bis 0,4 cm klein gehalten, um hohe Strömungsgeschwindigkeiten zu erzielen, die in der Regel zwischen 0,5 und über 2,0 cm/s liegen. Zudem wird bei den bekannten Modulen häufig versucht, durch Rezirkulation des Behälterinhalts einen großen Volumenstrom von über 100 l/h • m$^2$ zu erzielen, um eine hohe Strömungsgeschwindigkeit von über 2 cm/s zu erreichen. Das erfindungsgemäße Verfahren beschreitet also gegenüber dem Stand der Technik einen anderen Weg, indem es mit einer geringen Strömungsgeschwindigkeit im Behälter arbeitet.

Der Behälter ist in der Regel als geschlossener Behälter gestaltet; er kann aber auch einseitig offen sein, und zwar nur dann, wenn das zu trennende Stoffgemisch im Behälter eine Temperatur hat, die weit unterhalb seines Siedepunkts liegt. Dem Behälter wird das zu trennende Stoffgemisch entweder diskontinuierlich oder kontinuierlich zugeführt, so daß das Verfahren entweder im Chargenbetrieb oder im kontinuierlichen Betrieb ausgeführt werden kann.

Nach der Erfindung ist ferner vorgesehen, daß das zu trennende Stoffgemisch dem Behälter in flüssiger Phase zugeführt wird und im Behälter eine Temperatur hat, die 1 bis 10°C unter seiner Siedetemperatur liegt, oder daß das zu trennende Stoffgemisch dem Behälter in dampfförmiger Phase zugeführt wird und im Behälter eine Temperatur hat, die 1 bis 10°C über seinem Siedepunkt liegt, oder daß das zu trennende Stoffgemisch dem Behälter in flüssiger Phase zugeführt und dort auf seine Siedetemperatur erhitzt wird und im Behälter sowohl in flüssiger als auch dampfförmiger Phase vorliegt. Die drei Alternativen ermöglichen eine Trennung durch Pervaporation (flüssiges Stoffgemisch), durch Dampfpermeation (dampfförmiges Stoffgemisch) und durch gleichzeitige Pervaporation und Dampfpermeation (Stoffgemisch befindet sich an der Membran im Siedezustand). Der Siedepunkt des zu trennenden Stoffgemisches kann sich während des Trennprozesses verändern, da das Gemisch bezüglich des Permeats abgereichert wird. Im übrigen ist der Siedepunkt eines Gemisches üblicherweise als Siedebereich ausgebildet; in diesem Sinn ist der Begriff "Siedepunkt" also zu verstehen.

Zur Einstellung der Temperatur des zu trennenden Stoffgemischs kann der Behälter in bekannter Weise von außen- z. B. über einen Doppelmantel - beheizt werden, oder im Behälter ist mindestens ein Wärmeaustauscher angeordnet, dem elektrische Energie, Wasserdampf oder eine Heizflüssigkeit zugeführt wird. Der Einsatz von im Behälter angeordneten Wärmeaustauschern ist besonders vorteilhaft, weil hierdurch eine sehr genaue Temperaturregelung ermöglicht wird. Da an den Membranen eine Fallströmung entsteht, ist es besonders vorteilhaft, den Wärmeaustauscher im unteren Teil des Behälters anzuordnen, damit das erwärmte Stoffgemisch aufsteigt. Dadurch, daß das zu trennende, flüssige Stoffgemisch eine Temperatur von 1 bis 10°C unter seinem Siedepunkt hat, kann der positive Einfluß einer hohen Temperatur auf die Trennleistung der Pervaporation in vollem Umfang genutzt werden. Selbstverständlich ist es möglich, den Behälter auch mit einem gewissen Überdruck zu fahren, um die Temperatur des zu trennenden, flüssigen Stoffgemisches zu erhöhen, wobei dieser Betriebsweise allerdings durch die Temperaturstabilität der Membran Grenzen gesetzt sind. Dadurch, daß das zu trennende, dampfförmige Stoffgemisch eine Temperatur von 1 bis 10°C über seinem Siedepunkt hat, wird in vorteilhafter Weise eine Überhitzung der Dampfphase und damit eine Verminderung der Trennleistung vermieden.

Wenn das erfindungsgemäße Verfahren direkt am Siedepunkt des Stoffgemisches durchgeführt wird, erfolgt eine optimale Durchmischung des zu trennenden Stoffgemisches, so daß sich optimale Stoff- und Wärmeübergangskoeffizienten einstellen und eine optimale Trennleistung erreicht wird. Erfindungsgemäß kann bei dieser Verfahrensvariante unter erhöhtem Druck im Behälter gearbeitet werden, um den Siedepunkt des zu trennenden Stoffgemisches noch zu erhöhen, oder es kann unter etwas vermindertem Druck gearbeitet werden, um den Siedepunkt zu erniedrigen, wodurch einer verminderten Temperaturstabilität der Membran oder des zu trennenden Stoffgemisches Rechnung getragen werden kann.

Für den Fall, daß das erfindungsgemäße Verfahren am Siedepunkt des Stoffgemisches durchgeführt wird, ist es besonders zweckmäßig, wenn die im Behälter erzeugte Dampfphase an einem auf dem Behälter angeordneten Rückflußkühler kondensiert wird, wobei erfindungsgemäß vorgesehen ist, daß das im Rückflußkühler erzeugte Kondensat in den Behälter, einen anderen Behälter oder einen anderen Behälterabschnitt zurückgeführt wird. Der Betrieb eines Rückflußkühlers ist in der chemischen Technik allgemein gebräuchlich und problemlos möglich. Der Energiebedarf des Rückflußkühlers wirkt sich beim erfindungsgemäßen Verfahren nicht nachteilig aus, da beim Arbeiten am Siedepunkt unter gleichzeitiger Erzeugung eines Rückflusses sowohl eine gute Durchmischung des zu trennenden Stoffgemisches als auch eine optimale Trennleistung erreicht werden kann. Durch die erfindungsgemäße Führung des im Rückflußkühler erzeugten Kondensats kann darüber hinaus eine Steigerung der Trennleistung des erfindungsgemäßen Verfahrens erreicht werden, denn diese Kondensatführung hat die vorteilhaften Wirkungen einer fraktionierten Destillation. Die Durchführung des erfindungsgemäßen Verfahrens am Siedepunkt des zu trennenden Stoffgemisches unter Verwendung eines Rückflußkühlers hat sich besonders dann als vorteilhaft erwiesen, wenn das zu trennende Stoffgemisch eine höher siedende Komponente enthält, die durch die Membran permeiert. In diesem Fall tritt an der Membran infolge der Abreicherung der höher siedenden Komponente eine Erniedrigung der Siedetemperatur ein, wodurch das zugeführte Stoffgemisch an der Membranoberfläche bevorzugt siedet und damit die Bildung einer nachteiligen stationären Grenzschicht an der Membran besonders wirksam verhindert wird. Bei der Kondensatrückführung handelt es sich nicht um eine Rezirkulation des zu trennenden Stoffgemisches, bei der das zu trennende Stoffgemisch lediglich umgewälzt wird, um die Strömungsgeschwindigkeit zu erhöhen.

Das erfindungsgemäße Verfahren kann besonders vorteilhaft durchgeführt werden, wenn das zu trennende Stoffgemisch dem Behälter kontinuierlich zugeführt wird und wenn das Retentat aus dem Behälter sowie das Permeat aus dem Innenraum des Hohlkörpers kontinuierlich abgeführt werden.

Der kontinuierliche Anlagenbetrieb ist insbesondere bei der Aufarbeitung großer Mengen eines Stoffgemisches vorteilhaft, und er ist auch betriebssicher möglich. Selbstverständlich eignet sich das erfindungsgemäße Verfahren auch zur chargenweisen Aufarbeitung von flüssigen Stoffgemischen.

Für den Fall, daß dem Behälter ein flüssiges Stoffgemisch zugeführt wird, ist nach der Erfindung vorgesehen, daß die Zufuhr des zu trennenden flüssigen Stoffgemisches in den Behälter und die Abfuhr des flüssigen Retentats aus dem Behälter allein durch Schwerkraft erfolgt. Bei dieser Betriebsweise kann auf den Einsatz von Förder- oder Rezirkulationspumpen verzichtet werden, welche erfahrungsgemäß in jeder Anlage eine Schwachstelle darstellen. Die Förderung der Stoffströme durch Schwerkraft wird dadurch erreicht, daß aus einem Vorratsbehälter auf höherem Niveau in einen Retentat-Behälter auf tieferem Niveau gefördert wird. Die so erzeugte Strömung ist ausreichend, da sie lediglich der kontinuierlichen Zufuhr von zu trennendem Stoffgemisch und nicht der Erzeugung eines turbulenten Zustands dienen muß.

Schließlich ist nach der Erfindung vorgesehen, daß das Permeat aus dem Innenraum des Hohlkörpers durch Anlegen eines Vakuums, durch einen Inertgasstrom oder durch einen inerten Flüssigkeitsstrom abgeführt wird, wodurch der für den Permeat-Transport erforderliche Konzentrationsgradient eingestellt wird. Die Methoden der Permeat-Abführung sind zwar an sich bekannt, es ist aber überraschend, daß diese Methoden auch beim Einsatz von Hohlkörpern eine sehr gute Trennleistung gewährleisten, die den mit Flachmembranen erzielten Trennleistungen nicht nachstehen.

Nach der Erfindung ist es zweckmäßig, daß das durch Anlegen eines Vakuums abgeführte Permeat gegebenenfalls auf Normaldruck gebracht und kondensiert wird, das durch einen Inertgasstrom abgeführte Permeat aus dem Inertgasstrom auskondensiert wird und das durch einen inerten Flüssigkeitsstrom abgeführte Permeat durch Destillation aus dem Flüssigkeitsstrom gewonnen wird.

Die der Erfindung zugrunde liegende Aufgabe wird ferner durch die Schaffung einer Vorrichtung gelöst, die aus einem beheizbaren Behälter besteht, in dem mindestens ein einseitig offener Hohlkörper angeordnet ist, wobei die vom zu trennenden Stoffgemisch erfüllten Räume des Behälters einen hydraulischen Durchmesser von 1 bis 3 cm haben, wobei der Behälter einen Zulauf für das zu trennende Stoffgemisch und einen Ablauf für das Retentat aufweist, wobei die Öffnungen der Hohlkörper in einen geschlossenen Permeatraum münden, der einen Auslaß zur Abführung des Permeats aufweist und wobei jeder Hohlkörper entweder aus einer formstabilen Membran oder aus einem Träger besteht, auf dessen Außenseite die Membran angeordnet ist.

Es ist ohne weiteres möglich, den Hohlkörper im Behälter so anzuordnen, daß der Innenraum des Hohlkörpers zuverlässig gegen den Behälterraum abgedichtet werden kann. Ferner ist es ohne weiteres möglich, den Permeatraum gegenüber dem Behälterraum zuverlässig abzudichten. Die Konstruktion der erfindungsgemäßen Vorrichtung kann also unter Verwendung einfacher technischer Mittel erfolgen. Das Merkmal der erfindungsgemäßen Vorrichtung, gemäß dem die vom zu trennenden Stoffgemisch erfüllten Räume des Behälters einen hydraulischen Durchmesser von 1 bis 3 cm haben, bewirkt eine relativ langsame Strömung im Behälter, deren Geschwindigkeit 0,1 bis 0,3 cm/s beträgt. In den zum Stand der Technik gehörenden Modulen (z. B. Platten-, Spiralwickel-, Kapillar-Module) wird der hydraulische Durchmesser mit 0,2 bis 0,4 cm klein gehalten, um hohe Strömungsgeschwindigkeiten zu erzielen, die in der Regel zwischen 0,5 und über 2,0 cm/s liegen. Bei der Konstruktion der erfindungsgemäßen Vorrichtung wird also gegenüber dem bekannten Stand der Technik ein anderer Weg beschritten, indem ihr Behälter einen großen hydraulischen Durchmesser aufweist. Der hydraulische Durchmesser $d_h$ ist wie folgt definiert:

$$d_h = \frac{4F}{U}$$

F = Querschnittsfläche des mit dem zu trennenden Stoffgemisch erfüllten und durchströmten Raumes des Behälters,

U = Umfang des mit dem zu trennenden Stoffgemisch erfüllten und durchströmten Raumes des Behälters.

Nach der Erfindung hat es sich besonders bewährt, wenn im Behälter mindestens ein Wärmeaustauscher angeordnet ist, wobei es besonders vorteilhaft ist, wenn der Wärmeaustauscher im unteren Teil des Behälters angeordnet wird, damit das erwärmte Stoffgemisch an der Membran aufsteigt und sich mit dem an der Membran befindlichen Stoffgemisch vermischt, das sich während der Trennung abkühlt und sich daher in einer Fallströmung befindet. Mit dem Wärmeaustauscher ist eine zuverlässige und genaue Temperatureinstellung und -regelung möglich. Nach der Erfindung ist ferner vorgesehen, daß dem Behälter ein Verdampfer vorgeschaltet ist oder daß der Behälter den oberen Teil eines Verdampfers oder einer Destillationskolonne bildet. Im vorgeschalteten Verdampfer wird ein flüssiges Stoffgemisch in die Dampfphase überführt, und die Dampfphase gelangt danach in den Behälter. Wenn der Behälter den oberen Teil eines Verdampfers oder einer Destillationskolonne bildet, verdampft das flüssige Stoffgemisch im unteren Teil des Behälters, der als Verdampfer oder als Destillationskolonne gestaltet ist, der Dampf steigt in den oberen Teil des Behälters, in dem sich die Hohlkörper befinden, und wird dort in die Bestandteile getrennt. Durch diese erfindungsgemäßen Konstruktionsvarianten kann die Vorrichtung also zur Durchführung einer Dampfpermeation verwendet werden. Nach der Erfindung ist auch vorgesehen, daß auf dem Behälter mindestens ein Rückflußkühler angeordnet ist. Diese Konstruktionsvariante wird dann benutzt, wenn die erfindungsgemäße Vorrichtung zur Durchführung eines Trennverfahrens eingesetzt werden soll, das am Siedepunkt des zu trennenden Stoffgemisches arbeitet und in gleicher Weise das Prinzip der Pervaporation und der Dampfpermeation nutzt.

In weiterer Ausgestaltung der Erfindung ist vorgesehen, daß der Auslaß des Permeatraums mit einer Vakuumpumpe oder einem Kondensator oder einer Destillationskolonne verbunden ist. Durch die Vakuumpumpe wird das Permeat aus dem Innenraum des Hohlkörpers abgeführt, durch den Kondensator wird das Permeat, welches aus dem Innenraum des Hohlkörpers durch einen Inertgasstrom abgeführt wird, aus dem Inertgasstrom auskondensiert, und durch die Destillationskolonne wird das Permeat, welches aus dem Innenraum des Hohlkörpers mit einem inerten Flüssigkeitsstrom abgeführt wird, aus dem Flüssigkeitsstrom durch Destillation abgetrennt. In zweckmäßiger Ausgestaltung der Erfindung ist auch vorgesehen, daß der Vakuumpumpe gegebenenfalls ein Druckausgleichsventil und ein Kondensator nachgeschaltet sind. Das von der Vakuumpumpe abgesaugte Permeat wird dem Kondensator zugeführt, in dem das Permeat in flüssiger Form anfällt. Das Permeat kann vorher durch das Druckausgleichsventil auf Normaldruck gebracht werden. Für den Fall, daß das Permeat aus dem Innenraum des Hohlkörpers mittels eines Inertgasstroms oder eines inerten Flüssigkeitsstroms abgeführt wird, ist nach der Erfindung vorgesehen, daß im Innenraum des Hohlkörpers ein Rohr oder ein Schlauch für die Zufuhr eines Inertgasstroms oder eines inerten Flüssigkeitsstroms angeordnet ist. Die Abdichtung dieses Rohres, das durch den Permeatraum in den Innenraum des Hohlkörpers geführt wird, ist ohne weiteres mit einfachen technischen Mitteln möglich.

Nach der Erfindung ist es besonders vorteilhaft, wenn der Hohlkörper die Form eines einseitig offenen, zylindrischen Rohres hat und der Träger des Hohlkörpers porös und inert ist sowie aus einem Kunststoff, einem metallischen Werkstoff oder einem keramischen Werkstoff besteht. Wenn der einseitig offene Hohlkörper lediglich aus der Membran besteht, ist es erforderlich, daß die Membran eine Stützschicht aufweist, welche die Herstellung formstabiler Rohre ermöglicht; die Stützschicht muß also sowohl für das Permeat durchlässig sein als auch einen geeigneten Durchmesser aufweisen, der die Formung eines Rohres zuläßt. Die Trennschicht der Membran muß so elastisch und dünn sein, daß sie bei der Formung des Rohres nicht reißt. Diese Anforderungen an die Membran werden sowohl von einigen bekannten Komposit-Membranen als auch von einigen bekannten integral-asymmetrischen Membranen erfüllt. Einseitig offene Stützrohre für die Membran, die porös und inert sind sowie aus einem Kunststoff, einem metallischen Werkstoff oder einem keramischen Werkstoff bestehen, sind kommerziell verfügbar und eignen sich zum Aufbringen einer für die Pervaporation und/oder Dampfpermeation geeigneten Membran. Als Träger (Stützrohre) haben sich besonders einseitig offene Rohre bewährt, die porös sind und aus einem Sintermetall bestehen, die einen Außendurchmesser von 8 bis 50 mm, vorzugsweise 20 bis 35 mm, sowie einen Wanddurchmesser von ca. 1 bis 3 mm und eine Länge von 0,3 bis 2 m, vorzugsweise 1 m, haben. Als Träger für die Membran haben sich ferner einseitig offene Rohre aus einem gelochten Metallblech (Siebrohre) bewährt, die einen Außendurchmesser von 8 bis 50 mm, vorzugsweise 20 bis 35 mm, eine Wandstärke von 0,5 bis 2 mm, vorzugsweise 0,6 bis 0,8 mm, und eine Länge von 0,3 bis 2 m, vorzugsweise ca. 1 m, haben.

In zweckmäßiger Ausgestaltung der Erfindung ist vorgesehen, daß die Membran als Komposit-Membran oder als integral-asymmetrische Membran gestaltet ist, wobei sich zur Durchführung des erfindungsgemäßen Verfahrens beziehungsweise in der erfindungsgemäßen Vorrichtung die Membranen besonders bewährt haben, die in der deutschen Patentanmeldung 198 36 418.0 offenbart sind.

Schließlich ist nach der Erfindung vorgesehen, daß der Behälter der Vorrichtung als waagerecht durchströmter, geschlossener Kanal gestaltet ist, in dem mehrere Hohlkörper und ein oder mehrere Wärmeaustauscher senkrecht angeordnet sind, wobei das in einzelnen Hohlkörper-Gruppen anfallende Permeat jeweils in einen separaten Permeatraum gelangt, wobei es für den Fall, daß in der Vorrichtung am Siedepunkt des zu trennenden Stoffgemisches gearbeitet wird, zweckmäßig ist, daß auf dem als waagerecht durchströmten, geschlossenen Kanal gestalteten Behälter ein oder mehrere Rückflußkühler angeordnet sind. Durch diese Gestaltung der erfindungsgemäßen Vorrichtung werden also mehrere Hohlkörper hintereinander geschaltet, und mit dieser Anordnung kann insbesondere eine Fraktionierung des erzeugten Permeats erreicht werden, da das in einzelnen Hohlkörper-Gruppen anfallende Permeat jeweils in einen separaten Permeatraum gelangt.

Der Gegenstand der Erfindung wird nachfolgend anhand der Zeichnung sowie mehrerer Ausführungsbeispiele näher erläutert.

Fig. 1   zeigt einen Hohlkörper, der zur Durchführung des erfindungsgemäßen Verfahrens verwendet wird und Bestandteil der erfindungsgemäßen Vorrichtung ist.

Fig. 2   zeigt das Prinzip der Erfindung.

Fig. 3   zeigt eine bevorzugte Ausführungsform der erfindungsgemäßen Vorrichtung, die mehrere Hohlkörper enthält.

Fig. 4   zeigt eine bevorzugte Ausführungsform der erfindungsgemäßen Vorrichtung, die einen Rückflußkühler enthält.

Fig. 5   zeigt das Prinzip, gemäß dem das Permeat aus dem Innenraum des Hohlkörpers mittels eines Inertgasstroms oder eines inerten Flüssigkeitsstroms abgeführt wird.

Fig. 6   zeigt die bevorzugte Ausführungsform der erfindungsgemäßen Vorrichtung, bei welcher der Behälter als waagerecht durchströmter Kanal gestaltet ist.

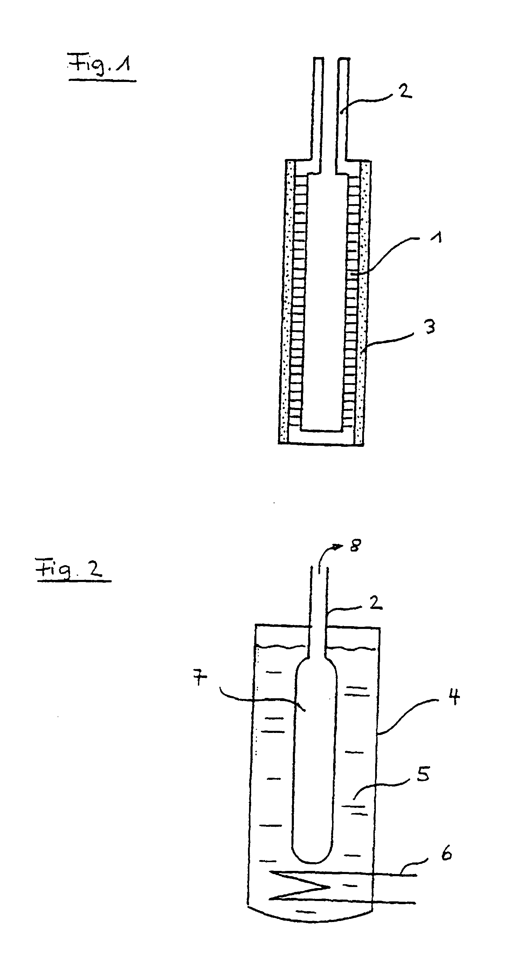

In Fig. 1 ist ein einseitig geschlossener, rohrförmiger, zylindrischer, als Träger (1) wirkender Hohlkörper dargestellt, auf dessen poröser Seitenwand eine Membran (3) angeordnet ist. Die Öffnung des Hohlkörpers mündet in einem Stutzen (2), dessen Seitenwand dicht ist und der in den Permeatraum (9) mündet.

In Fig. 2 ist das erfindungsgemäße Verfahrens- und Vorrichtungsprinzip dargestellt, gemäß dem der in Fig. 1 gezeigte Hohlkörper, auf welchem eine Membran (3) angeordnet ist, in das zu trennende Stoffgemisch (5) eintaucht. Das zu trennende Stoffgemisch (5) befindet sich in einem geschlossenen, beheizbaren Behälter (4), in dessen unterem Teil ein Wärmeaustauscher (6) angeordnet ist. Der Stutzen (2) wird aus dem Behälter (4) so herausgeführt, daß der Innenraum (7) des Hohlkörpers vom Innenraum des Behälters (4) hermetisch getrennt ist. Das Permeat (8) wird aus dem Innenraum (7) des Hohlkörpers abgeführt. Der Behälter (4) ist mit einem Zulauf für das zu trennende Stoffgemisch und einem Ablauf für das Retentat ausgerüstet, die in Fig. 2 nicht dargestellt sind. Anstelle des im Behälter (4) vorhandenen flüssigen Stoffgemisches (5) kann im Behälter (4) auch ein dampfförmiges Stoffgemisch vorliegen. Da die Pervaporation und die Dampfpermeation nach dem gleichen Trennmechanismus ablaufen, ist es nicht erforderlich, daß die gesamte Membranfläche durch das flüssige Stoffgemisch (5) umspült wird. Es ist möglich, daß nur ein Teil der Membranfläche in das flüssige Stoffgemisch (5) eintaucht.

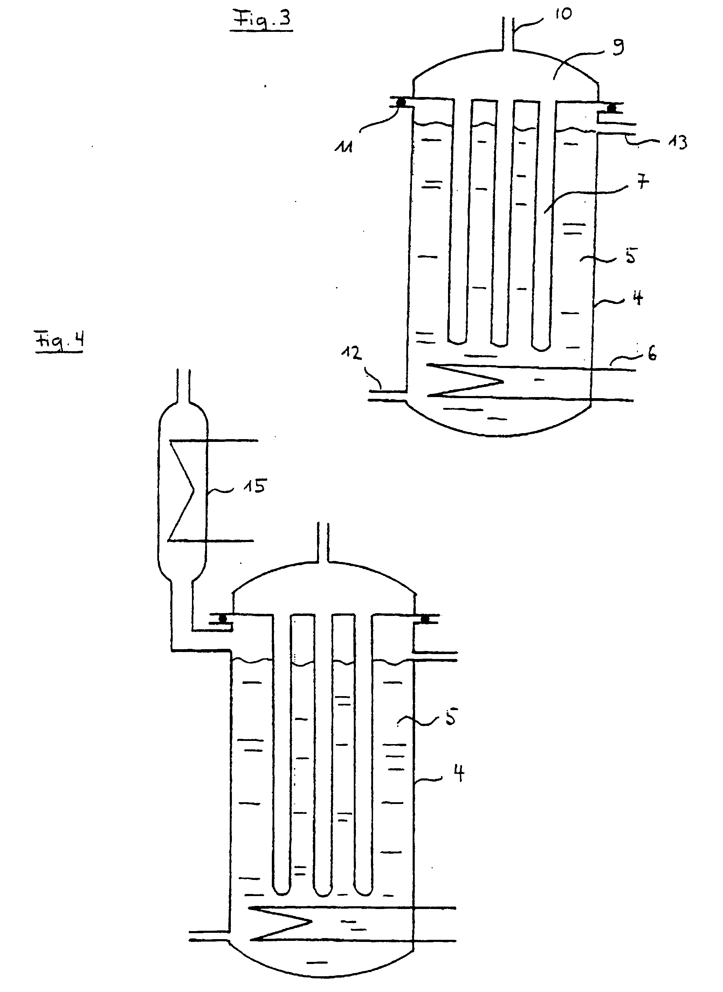

Bei der in Fig. 3 dargestellten Ausführungsform der erfindungsgemäßen Vorrichtung sind im Behälter (4) mehrere Hohlkörper angeordnet, deren Öffnungen im Permeatraum (9) münden. Dem Behälter (4) wird das zu trennende, flüssige Stoffgemisch (5) über den Zulauf (12) zugeführt, und das Retentat wird aus dem Behälter (4) über den Ablauf (13) abgeführt. Das Permeat gelangt aus den Innenräumen (7) der Hohlkörper in den Permeatraum (9) und wird von dort über den Stutzen (10) von einer Vakuumpumpe, die in Fig. 3 nicht dargestellt ist, abgesaugt. Die Arbeitstemperatur wird mittels des Wärmeaustauschers (6) eingestellt. Der Permeatraum (9) ist mit dem Behälter (4) über einen Flansch (11) verbunden, wobei der Permeatraum (9) und der Behälter (4) voneinander hermetisch getrennt sind.

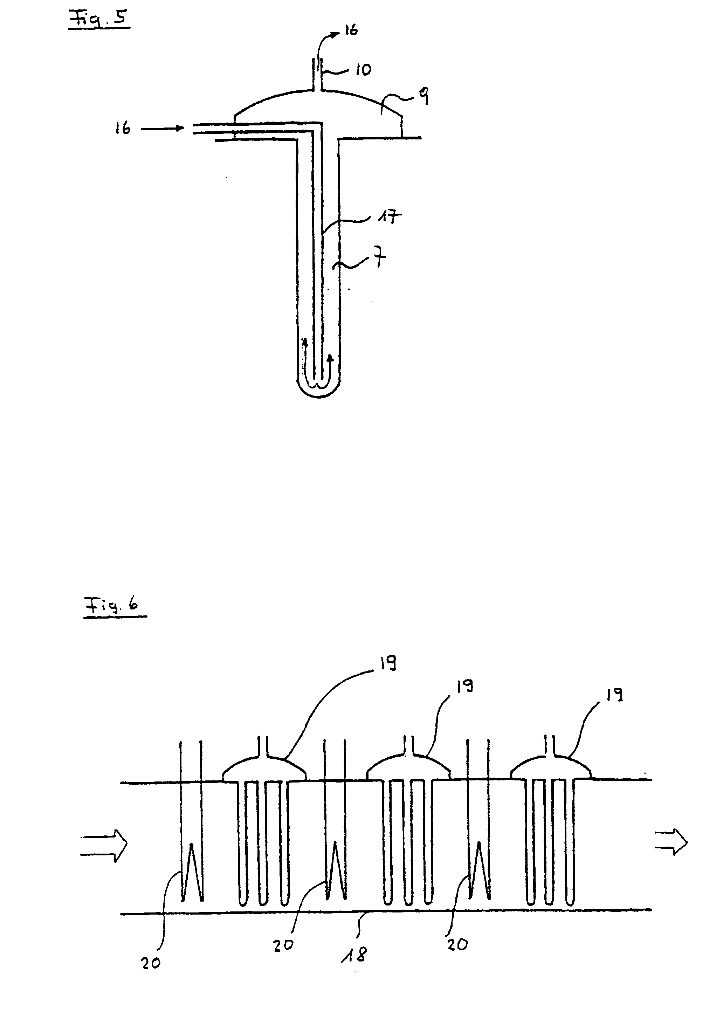

In Fig. 4 ist die Vorrichtung gemäß Fig. 3 dargestellt, die allerdings zusätzlich mit einem Rückflußkühler (15) ausgerüstet ist. Wenn das im Behälter (4) befindliche flüssige Stoffgemisch (5) auf seinen Siedepunkt erhitzt wird, verdampft ein Teil des Gemisches und wird im Rückflußkühler (15) kondensiert, wobei das Kondensat in den Behälter zurückfließt.

In Fig. 5 ist gezeigt, wie das Permeat unter Verwendung eines Inertgasstroms (16) über ein Rohr (17) aus dem Innenraum (7) des Hohlkörpers abgeführt werden kann. Der mit dem Permeat beladene Inertgasstrom (16) wird über den Stutzen (10) aus dem Permeatraum (9) abgeführt. Das Rohr (17) wird durch den Permeatraum (9) in den Innenraum (7) des Hohlkörpers geführt. Anstelle des Inertgasstroms (16) kann auch ein inerter Flüssigkeitsstrom zur Abführung des Permeats verwendet werden.

In Fig. 6 ist eine Ausführungsform der erfindungsgemäßen Vorrichtung dargestellt, in welcher der Behälter als waagerecht durchströmter, geschlossener Kanal (18) ausgebildet ist. Die Strömungsrichtung des zu trennenden Stoffgemisches wird durch die beiden Pfeile gezeigt. In dem als Kanal (18) gestalteten Behälter sind mehrere senkrecht angeordnete Wärmeaustauscher (20) angeordnet. Außerdem sind im Kanal (18) mehrere Hohlkörper angeordnet, die zu drei Gruppen zusammengefaßt sind. Die Öffnungen jeder Hohlkörpergruppe münden in die drei Permeaträume (19), aus denen drei Permeat-Fraktionen separat abgeführt werden.

Vergleichsbeispiel:

Auf ein poröses, einseitig geschlossenes Sintermetallrohr wird eine bekannte hydrophile Pervaporationsmembran durch Beschichtung aufgebracht. Dieser einseitig geschlossene Hohlkörper wird mit einer Vakuumpumpe und einer Kühlfalle zur Kondensation des Permeats verbunden. Der Hohlkörper ist in geringem Abstand von einem konzentrisch angeordneten Rohr umgeben, durch welches das zu trennende Stoffgemisch so geführt wird, daß die Membran überströmt wird. Die Überströmungsart sowie der Permeatfluß, die beim Vergleichsversuch eingehalten beziehungsweise gemessen wurden, sind in der Tabelle angegeben, und sie entsprechen den Werten, welche gemäß dem Stand der Technik unter Verwendung von Flachmembranen und Plattenmodulen gefunden werden.

Beispiel 1:

Der mit einer Membran versehene Hohlkörper, welcher zur Durchführung des Vergleichsbeispiels verwendet wurde, wird in einen Behälter eingetaucht, der das zu trennende Stoffgemisch enthält, welches zur Durchführung des Vergleichsbeispiels verwendet worden ist. Aus der Tabelle geht hervor, daß die Trennleistung in etwa mit der Trennleistung identisch ist, die bei laminarer Strömung nach dem Stand der Technik (Vergleichsbeispiel) gefunden wurde.

Beispiel 2:

Das Beispiel 1 wird in der Weise wiederholt, daß im Behälter eine Strömung aufrechterhalten wird, welche bei der Durchführung eines kontinuierlichen Prozesses erforderlich wäre. Aus der Tabelle geht hervor, daß die Trennleistungen von Beispiel 1 und Beispiel 2 nahezu identisch sind.

Beispiel 3:

Der zur Durchführung der Beispiele 1 und 2 verwendete Hohlkörper wird in ein siedendes, flüssiges Stoffgemisch eingetaucht. Aus der Tabelle geht hervor, daß bei dieser Betriebsweise eine Trennleistung erzielt wird, die der Trennleistung entspricht, welche gemäß dem Stand der Technik bei turbulenter Strömung erzielt wird (siehe Vergleichsbeispiel).

Beispiel 4:

Das Beispiel 3 wird in der Weise wiederholt, daß der Hohlkörper nur zur Hälfte in das siedende, flüssige Stoffgemisch eintaucht. Aus der Tabelle geht hervor, daß die Trennleistung etwa der Trennleistung entspricht, die gemäß Beispiel 3 erzielt wird.
Die Arbeitsergebnisse, die bei der Entwässerung von Ethanol gemäß den Beispielen 1 bis 4 gefunden wurden, lassen sich auch auf die Entwässerung anderer Lösungsmittel und die Trennung anderer flüssiger Gemische übertragen. Die Beispiele 1 bis 4 zeigen, daß gemäß der Erfindung gleiche oder bessere Trennleistungen erzielt werden als nach dem Stand der Technik, wobei die Erfindung allerdings den Vorteil bietet, daß sie technisch einfache Verfahrens- und Vorrichtungsmerkmale benutzt und insbesondere auf die nach dem Stand der Technik vorgesehene zwangsweise Überströmung der Membran verzichtet. Gegenüber den zum Stand der Technik gehörenden Verfahren und Vorrichtungen ermöglicht die Erfindung eine außerordentlich kostengünstige Stofftrennung durch Pervaporation und/oder Dampfpermeation, was vor allem darauf zurückzuführen ist, daß die Erfindung auf eine Zwangsüberströmung der Membran verzichtet und daß im Behälter eine Strömungsgeschwindigkeit von 0,1 bis 0,3 cm/s eingehalten wird, wobei der hydraulische Durchmesser der vom zu trennenden Stoffgemisch erfüllten und durchströmten Räume des Behälters 1 bis 3 cm beträgt.

Tabelle

Permeatleistungen bei der Entwässerung eines Stoffgemisches aus 90 Gew.-% Ethanol und 10 Gew.-% Wasser mit einer hydrophilen Membran

| Beispiel | Strömungsart | Temperatur des Stoffgemisches | Permeatfluß g/m$^2 \cdot$ h |
|---|---|---|---|
| Vergleich | laminar | 75°C | 1270 |
| Vergleich | turbulent | 76°C | 2280 |
| 1 | | 77°C | 1300 |
| 2 | | 76°C | 1240 |
| 3 | | 80°C | 2445 |
| 4 | | 82°C | 2350 |

**Patentansprüche**

1. Verfahren zur Trennung von flüssigen und/oder dampfförmigen Stoffgemischen durch Pervaporation und/oder Dampfpermeation, **dadurch gekennzeichnet, daß** die Membran (3) als formstabiler, einseitig offener Hohlkörper gestaltet oder auf einem porösen, einseitig offenen, als Träger (1) dienenden Hohlkörper angeordnet ist, daß der Hohlkörper in einem beheizbaren Behälter (4) angeordnet ist, der das zu trennende Stoffgemisch (5) enthält, daß zwischen dem zu trennenden Stoffgemisch (5) und dem Innenraum (7) des Hohlkörpers bezüglich des abzutrennenden Stoffs (Permeat) ein Konzentrationsgradient eingestellt wird, der das Permeat (8) durch die Membran (3) in den Innenraum (7) des Hohlkörpers transportiert, daß das Permeat (8) aus dem Innenraum (7) des Hohlkörpers abgeführt und das vom Permeat (8) abgereicherte Stoffgemisch (Retentat) aus dem Behälter (4) abgeführt wird, wobei im Behälter (4) eine Strömungsgeschwindigkeit von 0,1 bis 0,3 cm/s herrscht.

2. Verfahren nach Anspruch 1, **dadurch gekennzeichnet, daß** das zu trennende Stoffgemisch (5) dem Behälter (4) in flüssiger Phase zugeführt wird und im Behälter (4) eine Temperatur hat, die 1 bis 10°C unter seinem Siedepunkt liegt.

3. Verfahren nach Anspruch 1, **dadurch gekennzeichnet, daß** das zu trennende Stoffgemisch (5) dem Behälter (4) in dampfförmiger Phase zugeführt wird und im Behälter (4) eine Temperatur hat, die 1 bis 10°C über seinem Siedepunkt liegt.

4. Verfahren nach Anspruch 1, **dadurch gekennzeichnet, daß** das zu trennende Stoffgemisch (5) dem Behälter (4) in flüssiger Phase zugeführt und dort auf seine Siedetemperatur erhitzt wird und im Behälter (4) sowohl in flüssiger als auch in dampfförmiger Phase vorliegt.

5. Verfahren nach Anspruch 4, **dadurch gekennzeichnet, daß** das zu trennende Stoffgemisch (5) bei erhöhtem oder vermindertem Druck auf seine Siedetemperatur erhitzt wird.

6. Verfahren nach den Ansprüchen 4 und 5, **dadurch gekennzeichnet, daß** die im Behälter (4) erzeugte Dampfphase an einem auf dem Behälter (4) angeordneten Rückflußkühler (15) kondensiert wird.

7. Verfahren nach Anspruch 6, **dadurch gekennzeichnet, daß** das im Rückflußkühler (15) erzeugte Kondensat in den Behälter, einen anderen Behälter oder einen anderen Behälterabschnitt zurückgeführt wird.

8. Verfahren nach den Ansprüchen 1 bis 4, **dadurch gekennzeichnet, daß** das zu trennende Stoffgemisch (5) dem Behälter (4) kontinuierlich zugeführt wird und daß das Retentat aus dem Behälter (4) sowie das Permeat (8) aus dem Innenraum (7) des Hohlkörpers kontinuierlich abgeführt werden.

9. Verfahren nach Anspruch 8, **dadurch gekennzeichnet, daß** die Zufuhr des zu trennenden flüssigen Stoffgemisches (5) in den Behälter (4) und die Abfuhr des flüssigen Retentats aus dem Behälter (4) allein durch Schwerkraft erfolgt.

10. Verfahren nach Anspruch 1, **dadurch gekennzeichnet, daß** das Permeat (8) aus dem Innenraum (7) des Hohlkörpers durch Anlegen eines Vakuums, durch einen Inertgasstrom (16) oder durch einen inerten Flüssigkeitsstrom abgeführt wird, wodurch der für den Permeat-Transport erforderliche Konzentrationsgradient eingestellt wird.

11. Verfahren nach Anspruch 10, **dadurch gekennzeichnet, daß** das durch Anlegen eines Vakuums abgeführte Permeat (8) gegebenenfalls auf Normaldruck gebracht und kondensiert wird, das durch einen Inertgasstrom (16) abgeführte Permeat (8) aus dem Inertgasstrom (16) auskondensiert wird und das durch einen inerten Flüssigkeitsstrom abgeführte Permeat (8) durch Destillation aus dem Flüssigkeitsstrom gewonnen wird.

12. Vorrichtung zur Durchführung des Verfahrens nach den Ansprüchen 1 bis 11, **dadurch gekennzeichnet, daß** sie aus einem beheizbaren Behälter (4) besteht, in dem mindestens ein einseitig offener Hohlkörper angeordnet ist, wobei die vom zu trennenden Stoffgemisch erfüllten Räume des Behälters (4) einen hydraulischen Durchmesser von 1 bis 3 cm haben, wobei der Behälter (4) einen Zulauf (12) für das zu trennende Stoffgemisch und einen Ablauf (13) für das Retentat aufweist, wobei die Öffnungen der Hohlkörper in einen geschlossenen Permeatraum (9) münden, der einen Auslaß (10) zur Abführung des Permeats (8) aufweist und wobei jeder Hohlkörper entweder aus einer formstabilen Membran (3) oder aus einem Träger (1) besteht, auf dessen Außenseite die Membran (3) angeordnet ist.

**13.** Vorrichtung nach Anspruch 12, **dadurch gekennzeichnet, daß** im Behälter (4) mindestens ein Wärmeaustauscher (6) angeordnet ist.

**14.** Vorrichtung nach Anspruch 12, **dadurch gekennzeichnet, daß** dem Behälter (4) ein Verdampfer vorgeschaltet ist oder daß der Behälter (4) den oberen Teil eines Verdampfers oder einer Destillationskolonne bildet.

**15.** Vorrichtung nach Anspruch 12, **dadurch gekennzeichnet, daß** auf dem Behälter (4) mindestens ein Rückflußkühler (15) angeordnet ist.

**16.** Vorrichtung nach Anspruch 12, **dadurch gekennzeichnet, daß** der Auslaß (10) des Permeatraums (9) mit einer Vakuumpumpe oder einem Kondensator oder einer Destillationskolonne verbunden ist.

**17.** Vorrichtung nach Anspruch 16, **dadurch gekennzeichnet, daß** der Vakuumpumpe gegebenenfalls ein Druckausgleichsventil und ein Kondensator nachgeschaltet sind.

**18.** Vorrichtung nach Anspruch 12, **dadurch gekennzeichnet, daß** im Innenraum (7) des Hohlkörpers ein Rohr (17) oder ein Schlauch für die Zufuhr eines Inertgasstroms (16) oder eines inerten Flüssigkeitsstroms angeordnet ist.

**19.** Vorrichtung nach Anspruch 12, **dadurch gekennzeichnet, daß** der Hohlkörper die Form eines einseitig offenen, zylindrischen Rohres hat.

**20.** Vorrichtung nach Anspruch 12, **dadurch gekennzeichnet, daß** der als Träger (1) dienende Hohlkörper porös und inert ist sowie aus einem Kunststoff, einem metallischen Werkstoff oder einem keramischen Werkstoff besteht.

**21.** Vorrichtung nach Anspruch 12, **dadurch gekennzeichnet, daß** die Membran (3) als Komposit-Membran oder als integral-asymmetrische Membran gestaltet ist.

**22.** Vorrichtung nach den Ansprüchen 12 bis 21, **dadurch gekennzeichnet, daß** der Behälter (4) als waagerecht durchströmter, geschlossener Kanal (18) gestaltet ist, in dem mehrere Hohlkörper und ein oder mehrere Wärmeaustauscher (20) senkrecht angeordnet sind, wobei das in einzelnen Hohlkörper-Gruppen anfallende Permeat (8) jeweils in einen separaten Permeatraum (19) gelangt.

**23.** Vorrichtung nach Anspruch 22, **dadurch gekennzeichnet, daß** auf dem als waagerecht durchströmten, geschlossenen Kanal (18) gestalteten Behälter ein oder mehrere Rückflußkühler (15) angeordnet sind.

**Claims**

**1.** A method for separating liquid and/or vaporous substance mixtures by way of pervaporation and/or vapour permeation, **characterised in that** the membrane (3) is formed as a shape-stable, hollow body open on one side or is arranged on a porous hollow body which is open on one side and serves as a carrier (1), that the hollow body is arranged in a heatable container (4) which contains the substance mixture (5) to be separated, that between the substance mixture (5) to be separated and the inner space (7) of the hollow body a concentration gradient is set with respect to the substance to be separated (permeate), which transports the permeate (8) through the membrane (3) into the inner space (7) of the hollow body, that the permeate (8) is led away out of the inner space (7) of the hollow body and the substance mixture (residue) depleted from the permeate is led away out of the container (4), wherein in the container (4) there prevails a flow speed of 0.1 to 0.3 cm/s.

**2.** A method according to claim 1, **characterised in that** the substance mixture (5) to be separated is supplied to the container (4) in a liquid phase and in the container (4) has a temperature which lies 1 to 10°C below its boiling point.

**3.** A method according to claim 1, **characterised in that** the substance mixture (5) to be separated is supplied to the container (4) in a vaporous phase and in the container (4) has a temperature which lies 1 to 10°C above its boiling point.

**4.** A method according to claim 1, **characterised in that** the substance mixture (5) to be separated is supplied to the container (4) in a liquid phase and here is heated to its boiling temperature and is present in the container (4) in the liquid as well as in the vaporous phase.

**5.** A method accoding to claim 4, **characterised in that** the substance mixture (5) to be separated is heated to its boiling temperature at an increased or reduced pressure.

**6.** A method accoding to one of the claims 4 and 5, **characterised in that** the vapour phase produced in the container (4) is condensed on a backflow cooler (15) arranged on the container (4).

**7.** A method according to claim 6, **characterised in that** the condensate produced in the backflow cooler (15) is led back into the container, another container or another container section.

**8.** A method according to one of the claims 1 to 4, **characterised in that** the substance mixture (5) to be separated is continously supplied to the container (4) and that the residue is continuously led away from the container (4) as well as the permeate (8) from the inner space (7) of the hollow body.

**9.** A method according to claim 8, **characterised in that** the supply into the container (4) of the liquid substance mixture (5) to be seperated and the removal of the liquid residue out of the container (4) is effected alone by way of gravity.

**10.** A method according to claim 1, **characterised in that** the permeate (8) is led away from the inner space (7) of the hollow body by applying a vacuum, by way of an inert gas flow (16) or by way of an inert liquid flow, by which means the concentration gradient required for the permeate transport is set.

**11.** A method according to claim 10, **characterised in that** the permeate (8) led away by way of applying a vacuum, where appropriate is brought back to normal pressure and condensed, the permeate (8) led away by an inert gas flow (16) is condensed out of the inert gas flow (16) and the permeate (8) led away by an inert fluid flow is extracted by distillation out of the fluid flow.

**12.** A device for carrying out the method according to the claims 1 to 11, **characterised in that** it consists of a heatable container (4) in which there is arranged at least one hollow body open on one side, wherein the spaces of the container (4) which are filled with the substance mixture to be separated have a hydraulic diameter of 1 to 3 cm, wherein the container (4) comprises a supply (12) for the substance mixture to be separated and a discharge (13) for the residue, wherein the openings of the hollow body open into a closed permeate space (9) which comprises an outlet (10) for leading away the permeate (8) and wherein each hollow body either consists of a shape-stable membrane (3) or of a carrier (1) on whose outer side the membrane (3) is arranged.

**13.** A device according to claim 12, **characterised in that** in the container (4) there is arranged at least one heat exchanger (6).

**14.** A device according to claim 12, **characterised in that** an evaporator is connected before the container (4) or that the container (4) forms the upper part of an evaporator or a distillation column.

**15.** A device according to claim 12, **characterised in that** on the container (4) there is arranged at least one backflow cooler (15).

**16.** A device according to claim 12, **characterised in that** the outlet (10) of the permeate space (9) is connected to a vacuum pump or to a condenser or a distillation column.

**17.** A device according to claim 16, **characterised in that** the vacuum pump where appropriate has a pressure compensation valve and a condenser connected after.

**18.** A device according to claim 12, **characterised in that** in the inner space (7) of the hollow body there is arranged a tube (17) or a flexible tubing for the supply of an inert gas flow (16) or of an inert fluid flow.

**19.** A device according to claim 12, **characterised in that** the hollow body has the shape of a cylindrical tube open on one side.

**20.** A device according to claim 12, **characterised in that** the hollow body serving as a carrier (1) is porous and inert as well as consists of a plastic, a metallic material or a ceramic material.

**21.** A device according to claim 12, **characterised in that** the membrane (3) is formed as a composite membrane or as an integral-asymmetrical membrane.

**22.** A device according to one of the claims 12 to 21, **characterised in that** the container (4) is designed as a horizontal, through-flow, closed channel (18) in which several hollow bodies and one or more heat exchangers (20) are perpendicularly arranged, wherein the permeate (8) arising in individual hollow body groups in each case gets into a separate permeate space (19).

**23.** A device according to claim 22, **characterised in that** on the container designed as a horizontal, through-flow, closed channel (18) there are arranged one or more backflow coolers (15).

**Revendications**

**1.** Procédé pour séparer des mélanges de substances à l'état liquide et/ou de vapeur par pervaporation et/ou perméation à la vapeur, **caractérisé en ce que** la membrane (3) prend la forme d'un corps creux ouvert unilatéralement, stable de forme, ou est disposée sur un corps creux poreux, ouvert unilatéralement, servant de support (1), **en ce que** le corps creux est disposé dans un récipient (4) chauffable, contenant le mélange de substances (5) à séparer, **en ce que** l'on ajuste un gradient de concentration entre le mélange de substances (5) à séparer et l'espace interne (7) du corps creux en ce qui concerne la substance à séparer (perméat), qui transporte le perméat (8) à travers la membrane (3) dans l'espace interne (7) du corps creux, **en ce que** le perméat (8) est évacué de l'espace interne (7) du corps creux et le mélange de substances (rétentat) appauvri du perméat (8) est évacué du récipient (4), une vitesse d'écoulement située entre 0,1 et 0,3 cm/s régnant dans le récipient (4).

**2.** Procédé selon la revendication 1, **caractérisé en ce que** le mélange de substances (5) à séparer est amené dans le récipient (4) en phase liquide et a dans le récipient (4) une température qui se situe entre 1 et 10°C en dessous de son point d'ébullition.

**3.** Procédé selon la revendication 1, **caractérisé en ce que** le mélange de substances (5) à séparer est amené dans le récipient (4) à l'état de vapeur et a dans le récipient (4) une température qui se situe entre 1 et 10°C au-dessus de son point d'ébullition.

**4.** Procédé selon la revendication 1, **caractérisé en ce que** le mélange de substances (5) à séparer est amené dans le récipient (4) en phase liquide et y est chauffé à sa température d'ébullition et est présent dans le récipient (4) aussi bien en phase liquide qu'en phase vapeur.

**5.** Procédé selon la revendication 1, **caractérisé en ce que** le mélange de substances (5) à séparer est chauffé à sa température d'ébullition à pression accrue ou bien réduite.

**6.** Procédé selon les revendications 4 et 5, **caractérisé en ce que** la phase vapeur produite dans le récipient (4) est condensée sur un condenseur à refluement (15) disposé sur le récipient (4).

**7.** Procédé selon la revendication 6, **caractérisé en ce que** le condensat produit dans le condenseur à refluement (15) est renvoyé dans le récipient, un autre récipient ou une autre section de récipient.

**8.** Procédé selon les revendications 1 à 4, **caractérisé en ce que** le mélange de substances (5) à séparer est amené en continu au récipient (4) et **en ce que** le rétentat est évacué du récipient (4) et le perméat (8) de l'espace interne (7) du corps creux en continu.

**9.** Procédé selon la revendication 8, **caractérisé en ce que** l'amenée dans le récipient (4) du mélange de substances (5) liquide à séparer et l'évacuation du rétentat liquide du récipient (4) s'effectue seulement par le biais de la gravité.

**10.** Procédé selon la revendication 1, **caractérisé en ce que** le perméat (8) est évacué de l'espace interne (7) du corps creux par instauration d'un vide, par un flux de gaz inerte (16) ou par un flux de liquide inerte, le gradient de concentration nécessaire au transport du perméat étant ajusté.

**11.** Procédé selon la revendication 10, **caractérisé en ce que** le perméat (8) évacué par instauration d'un vide est éventuellement porté à pression normale et condensé, le perméat (8) évacué par le biais d'un flux de gaz inerte (16) est condensé à partir du flux de gaz inerte et le perméat (8) évacué par le biais d'un flux de liquide inerte est obtenu par distillation à partir du flux liquide.

**12.** Dispositif pour réaliser le procédé selon les revendications 1 à 11, **caractérisé en ce qu'**il se compose d'un récipient (4) chauffable, dans lequel est disposé au moins un corps creux ouvert unilatéralement, les cavités du récipient (4), remplies du mélange de substances à séparer, ayant un diamètre hydraulique allant de 1 à 3 cm, le récipient (4) présentant une arrivée (12) pour le mélange de substances à séparer et une évacuation (13) pour le rétentat, les ouvertures des corps creux aboutissant dans une chambre de perméat (9) fermée, qui présente un orifice d'échappement (10) pour évacuer le perméat (8) et chaque corps creux se composant soit d'une membrane (3) de forme stable soit d'un support (1), sur la face externe duquel est disposée la membrane (3).

**13.** Dispositif selon la revendication 12, **caractérisé en ce qu'**au moins un échangeur de chaleur (6) est disposé dans le récipient (4).

**14.** Dispositif selon la revendication 12, **caractérisé en ce qu'**un évaporateur est monté avant le récipient (4) ou que le récipient (4) constitue la partie supérieure d'un évaporateur ou d'une colonne de distillation.

**15.** Dispositif selon la revendication 12, **caractérisé en ce qu'**au moins un condenseur à refluement (15) est disposé sur le récipient (4).

**16.** Dispositif selon la revendication 12, **caractérisé en ce que** l'orifice d'échappement (10) de la chambre de perméat (9) est relié à une pompe à vide ou un condenseur ou une colonne de distillation.

**17.** Dispositif selon la revendication 16, **caractérisé en ce qu'**une soupape d'équilibre de pression et un condenseur sont éventuellement montés après la pompe à vide.

**18.** Dispositif selon la revendication 12, **caractérisé en ce qu'**un tube (17) ou un tuyau pour l'amenée d'un flux de gaz inerte (16) ou d'un flux de liquide inerte est disposé dans l'espace interne (7) du corps creux.

**19.** Dispositif selon la revendication 12, **caractérisé en ce que** le corps creux a la forme d'un tube cylindrique ouvert unilatéralement.

**20.** Dispositif selon la revendication 12, **caractérisé en ce que** le corps creux servant de support (1) est poreux et inerte et se compose d'une matière plastique, d'un matériau métallique ou d'un matériau céramique.

**21.** Dispositif selon la revendication 12, **caractérisé en ce que** la membrane (3) est une membrane composite ou une membrane asymétrique intégrale.

**22.** Dispositif selon les revendications 12 à 21, **caractérisé en ce que** le récipient (4) prend la forme d'un canal (18) fermé, traversé à l'horizontale, dans lequel plusieurs corps creux et un ou plusieurs échangeurs de chaleur (20) sont disposés à la verticale, le perméat (8) apparaissant dans chaque groupe de corps creux parvenant respectivement dans une chambre de perméat (19) séparée.

**23.** Dispositif selon la revendication 22, **caractérisé en ce qu'**un ou plusieurs condenseurs à refluement (15) sont disposés sur le récipient conçu sous la forme d'un canal (18) fermé, traversé à l'horizontale.

Fig. 1

Fig. 2

Fig.3

Fig.4

Fig. 5

Fig. 6